# DEMANDE DE BREVET EUROPEEN

(11) **EP 0 939 353 A1**
(43) Date de publication de la demande: **01.09.1999**
(21) Numéro de dépôt: 99400311.9
(22) Date de dépôt: 10.02.1999
(51) Int. Cl.: G05B 9/02

(54) **Dispositif auxiliaire de commande d'au moins un organe fonctionnel à commande électrique**

(30) Priorité: 26.02.1998 FR 9802329
(71) Demandeur: Air Liquide Electronics Systems, 75007 Paris (FR)
(72) Inventeur: Viton, Michel, 38170 Seyssinet (FR)
(74) Mandataire: Vesin, Jacques

(57) **Abrégé**

L'invention concerne un dispositif auxiliaire de commande d'au moins un organe fonctionnel à commande électrique (3), destiné à remplacer une unité (5) principale de commande dudit au moins un organe fonctionnel (3), et enfichable dans des bornes (7, 9, 11) de raccordement de celle-ci prévues à cet effet. Ledit dispositif (1) comprenant pour chaque organe fonctionnel (3) un interrupteur (12) à commande manuelle interposé entre une ligne de fourniture (14) d'un potentiel électrique de commande destinée à être raccordée à une borne d'alimentation associée (9), et une ligne associée de transmission (16) du potentiel électrique de commande audit au moins un organe fonctionnel (3). Il comprend en outre pour chaque interrupteur (12) un organe (18) associé de commande de moyens (20) de sécurité d'amenée dudit potentiel électrique de commande audit au moins un interrupteur (12), l'activation desdits moyens de sécurité (20) étant provoquée par le premier état d'ouverture dudit au moins un interrupteur (12).

## Description

L'invention est relative à un dispositif auxiliaire de commande d'organes fonctionnels à commande électrique, tels que des électrovannes, destiné à remplacer une unité principale de commande, comme par exemple un automate de commande, en cas de défaillance et plus particulièrement à un dispositif auxiliaire de commande de vannes d'une installation de fourniture de gaz également connue sous le nom "gas cabinet".

La fabrication de circuits micro-électroniques nécessite l'utilisation de divers gaz dits "de travail" comme par exemple Cl₂, NH₃, HCI, HBr, NF₃ , WF₆ etc. qui sont considérés pour la plupart comme dangereux pour l'homme du fait de leur toxicité et/ou de leur inflammabilité.

Ces gaz sont acheminés vers des postes de consommation, tels que des postes de fabrication de circuits micro-électroniques, par l'intermédiaire d'une installation de fourniture de gaz.

Du fait de la toxicité des gaz employés, le contrôle sécurisé du fonctionnement d'une telle installation d'approvisionnement est une priorité absolue. C'est pourquoi de telles installations sont généralement équipées d'un automate de contrôle et de commande des diverses vannes disposées dans l'installation.

Pour des raisons économiques, il est nécessaire, en cas d'une défaillance de l'automate, de pouvoir continuer à commander les vannes.

A cet effet, on connaît un dispositif auxiliaire de commande d'électrovannes, destiné à remplacer l'automate, et enfichable dans des bornes de raccordement de celui-ci prévues à cet effet.

Ce dispositif comprend pour chaque électrovanne un interrupteur à commande manuelle interposé entre une ligne de fourniture d'un potentiel électrique de commande, destinée à être raccordée à une borne d'alimentation associée de l'automate et une ligne associée de transmission du potentiel électrique de commande à une électrovanne prédéterminée.

Ce dispositif présente l'inconvénient que, par inadvertance de l'opérateur, un ou plusieurs interrupteurs peuvent se trouver dans une position fermée lors du raccordement à l'automate de sorte que les vannes associées à ces interrupteurs s'ouvrent de manière intempestive, ce qui peut causer des dégâts matériels, ou même humain importants.

L'invention vise à pallier cet inconvénient en proposant un dispositif auxiliaire de commande plus sûr.

A cet effet, l'invention a pour un objet un dispositif auxiliaire de commande d'au moins un organe fonctionnel à commande électrique, destiné à remplacer une unité principale de commande dudit au moins un organe fonctionnel, par exemple en cas de défaillance de cette unité principale, et enfichable dans des bornes de raccordement de celle-ci prévues à cet effet, ledit dispositif comprenant pour chaque organe fonctionnel un interrupteur à commande manuelle interposé entre une ligne de fourniture d'un potentiel électrique de commande destinée à être raccordée à une borne d'alimentation associée, et une ligne associée de transmission du potentiel électrique de commande audit au moins un organe fonctionnel, caractérisé en ce qu'il comprend en outre pour chaque interrupteur un organe associé de commande de moyens de sécurité d'amenée dudit potentiel électrique de commande audit au moins un interrupteur, l'activation desdits moyens de sécurité étant provoquée par le premier état d'ouverture dudit au moins un interrupteur.

Le dispositif selon l'invention peut de plus comporter une ou plusieurs des caractéristiques suivantes :
- l'organe associé de commande desdits moyens de sécurité comprend un contact mobile d'activation porté par l'interrupteur auquel il est associé, disposé dans une ligne d'activation desdits moyens de sécurité et couplé à un contact mobile dudit interrupteur permettant la transmission du potentiel de commande audit au moins un organe fonctionnel ;
- lesdits moyens de sécurité comportent un relais à automaintien activé par la réception d'un potentiel d'alimentation par l'intermédiaire de ladite ligne d'activation pour établir dans sa position active la fourniture du potentiel électrique de commande audit au moins un interrupteur;
- ladite ligne d'activation est raccordée, en amont du relais à automaintien, à la ligne de fourniture du potentiel de commande pour fournir ledit potentiel d'alimentation au relais à automaintien lors du premier état d'ouverture dudit au moins un interrupteur;
- ladite ligne d'activation est raccordée à une pile électrique portée par le dispositif pour fournir ledit potentiel d'alimentation au relais à automaintien lors du premier état d'ouverture dudit au moins un interrupteur ;
- il comprend plusieurs interrupteurs pour plusieurs organes fonctionnels et l'activation desdits moyens de sécurité est provoquée par le premier état d'ouverture de l'ensemble des interrupteurs ;
- lesdits seconds contact mobiles sont disposés en série dans ladite ligne d'activation de sorte que les moyens de sécurité sont activés lorsque chaque interrupteur se trouve dans son premier état d'ouverture ;
- il comporte des moyens de signalisation de l'état d'activation desdits moyens de sécurité.

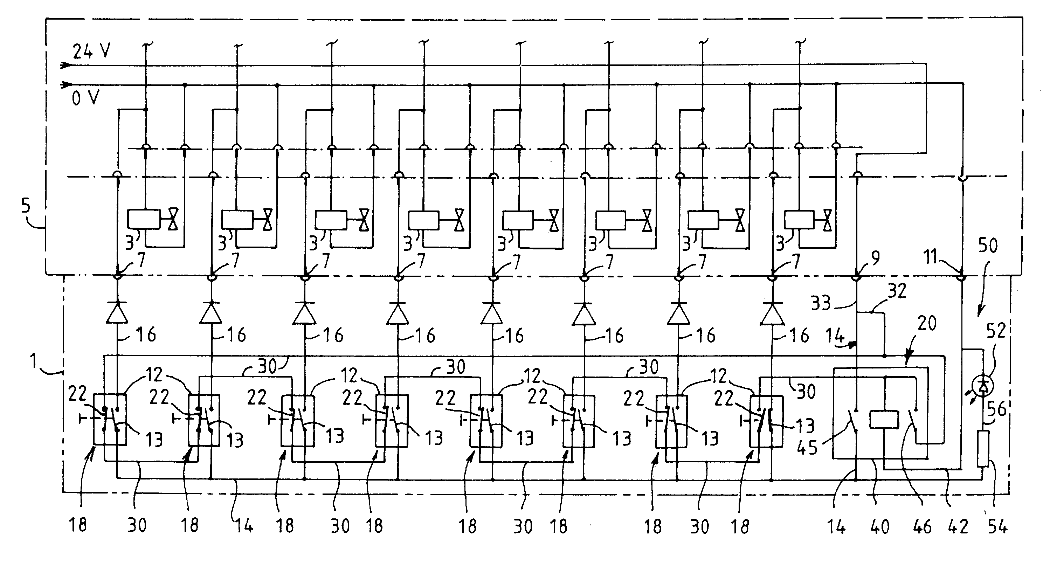

D'autres caractéristiques et avantages de l'invention ressortiront de la description suivante, donnée à titre d'exemple, sans caractère limitatif, en regard du dessin annexé représentant un schéma électrique du dispositif selon l'invention.

Sur la figure unique est représenté un dispositif 1 auxiliaire de commande d'au moins un, de préférence plusieurs organes fonctionnels 3 à commande électrique tel que par exemple des électrovannes d'une installation de fourniture de gaz également connue sous le nom "gas cabinet".

Ce dispositif auxiliaire 1 est destiné à remplacer une unité principale 5 de commande des électrovannes 3, telle qu'un automate, par exemple en cas de défaillance de celle-ci, et est enfichable dans des bornes 7, 9 et 11 de cette unité 5 prévues à cet effet.

Le dispositif auxiliaire 1 comprend pour chaque électrovanne 3 un interrupteur 12 associé à commande manuelle. Chaque interrupteur 12 comprend un premier contact mobile 13 permettant d'établir la transmission du potentiel de commande à un organe fonctionnel prédéterminé 3 dans la position fermée de l'interrupteur 12 et d'interrompre cette transmission dans la position ouverte de l'interrupteur 12.

A cet effet, chaque interrupteur 12 est interposé entre d'une part une ligne 14 de fourniture d'un potentiel électrique de commande destinée à être raccordée à une borne d'alimentation associée de l'unité 5, à savoir la borne de raccordement 9, et d'autre part une ligne associée 16 de transmission du potentiel électrique de commande à une électrovanne 3 déterminée, destinée à être raccordée à une borne de sortie associée, à savoir une borne de raccordement 7.

Afin que le dispositif 1 ne puisse pas commander une électrovanne 3 de manière intempestive lors de son raccordement aux bornes 7, 9 et 11 de l'unité 5, le dispositif 1 comprend pour chaque interrupteur 12 un organe associé 18 de commande de moyens 20 de sécurité d'amenée dudit potentiel électrique de commande à chaque interrupteur 12.

Chaque organe 18 est avantageusement formé par un second contact mobile 22 porté par l'interrupteur 12 auquel il est associé, et couplé au contact mobile 13 de transmission du potentiel de commande de telle manière qu'il est en position fermée lorsque le contact mobile 13 est en position ouverte et en position ouverte lorsque ce dernier est en position fermée. Ce second contact mobile 22 est appelé par la suite "contact mobile d'activation".

Comme on le voit sur la figure, les contacts mobiles d'activation 22 sont disposés en série dans une ligne d'activation 30 des moyens 20 de sécurité. Cette ligne d'activation 30 est alimentée avec le potentiel électrique de commande des électrovannes par un embranchement 32 raccordé à une portion 33 de la ligne de fourniture 14 qui est toujours au potentiel électrique de commande après un raccordement du dispositif 1 aux bornes 7,9 et 11.

Ainsi, après un raccordement du dispositif 1 aux bornes 7,9 et 11, le potentiel électrique de commande n'est acheminé vers les moyens de sécurité 20 qu'à partir du moment où l'ensemble des interrupteurs 12 se trouve en position ouverte et, par conséquent, tous les contacts mobiles d'activation 22 se trouvent en position fermée.

Les moyens 20 de sécurité comprennent un relais 40 à automaintien disposé en aval de la portion 33 dans la ligne 14 de fourniture. Ce relais 40 est activé par la réception d'un potentiel d'alimentation tel que par exemple le potentiel électrique de commande, par l'intermédiaire de ladite ligne d'activation 30. Dans la position active du relais 40, la fourniture du potentiel électrique de commande à chaque interrupteur 12 est assurée par la position fermée de son contact 45, son contact 46 dont l'entrée est reliée à la portion 33 qui est toujours au potentiel électrique de commande, maintenant par sa position fermée le relais 40 alimenté même si un des interrupteurs 12 est manoeuvré ultérieurement dans une position fermée et l'alimentation du relais 40 par la ligne d'activation 30 est interrompue. Dans la position non active du relais 40, le contact 45 est en position ouverte et interrompt la fourniture du potentiel de commande aux interrupteurs 12.

Bien entendu, la ligne d'activation 30 et ainsi le relais 40 peuvent également être alimentés par une source de tension indépendante de l'unité principale 5 comme par exemple par une pile électrique portée par le dispositif 1.

Par ailleurs, le relais 40 est relié par la ligne 42 à la borne 11 fournissant un potentiel de zéro volt.

En outre, le dispositif 1 comprend des moyens 50 de signalisation de l'état d'activation des moyens 20 de sécurité. Ces moyens 50 de signalisation son formés par une diode luminescente 52 et une résistance 54 disposées en série dans un embranchement 56 relié d'une part au potentiel de zéro volt et d'autre part, en aval du relais 40, à la ligne de fourniture 14 du potentiel électrique de commande à chaque interrupteur 12.

Le dispositif 1 auxiliaire de commande fonctionne de la manière suivante.

On suppose dans un premier temps qu'un des interrupteurs 12, par exemple celui disposé juste à côté des moyens 20 de sécurité, est en position fermée lors du raccordement du dispositif 1 à l'unité principale 5.

Comme le dispositif 1 n'est pas alimenté au départ, les contacts 45 et 46 du relais 40 sont en position ouverte et le potentiel de commande ne peut pas parvenir par la ligne 30 d'activation vers le relais 40 étant donné que cette ligne 30 est coupée par le contact mobile 22 de l'interrupteur disposé juste à côté des moyens 20 de sécurité et se trouvant en position fermée. Par conséquent, aucun des interrupteurs 12 n'est alimenté avec le potentiel de commande et une commande intempestive des électrovannes 3 par un opérateur est empêchée.

Le relais 40 n'est activé que lorsqu'il est alimenté électriquement. Pour ce faire, il faut donc basculer manuellement cet interrupteur 12 dans un premier état d'ouverture de sorte que le potentiel de commande puisse parvenir au relais 40 et fermer les contacts 45 et 46 de celui-ci. Pour un interrupteur, le "premier état d'ouverture" désigne la première fois que cet interrupteur 12 est en position ouverte après un raccordement à l'unité principale 5, sans distinction si cet interrupteur était dans cet état lors du raccordement du dispositif ou s'il a été amené ultérieurement dans cette position par un opérateur.

Une fois que le relais 40 est alimenté, le potentiel de commande est fourni par la ligne 14 à chaque interrupteur 12. Etant donné que le relais 40 est à automaintien, celui-ci reste alimenté du fait de la position fermée de son contact 46, même si un des interrupteurs 12 est par la suite manoeuvré dans une position fermée.

L'état d'activation du relais 40 est signalé à l'opérateur par les moyens 50, c'est-à-dire par l'émission lumineuse de la diode 52.

Bien entendu, si plusieurs interrupteurs 12 étaient dans une position fermée lors du raccordement, il faudrait amener chaque interrupteur 12 dans un premier état d'ouverture pour fermer le circuit d'alimentation du relais 40 comprenant d'une part la ligne d'activation 30 et d'autre par la ligne 42.

On voit par ces explications, que ce dispositif 1 auxiliaire de commande de l'invention procure une plus grande sécurité pour l'opérateur car les interrupteurs 12 ne sont alimentés par le potentiel de commande pour les électrovannes 3 que dans la mesure où chaque interrupteur a été placé une fois dans un premier état d'ouverture.

## Revendications

1. Dispositif auxiliaire de commande d'au moins un organe fonctionnel à commande électrique (3), destiné à remplacer une unité (5) principale de commande dudit au moins un organe fonctionnel (3), par exemple en cas de défaillance de cette unité principale (5), et enfichable dans des bornes (7, 9, 11) de raccordement de celle-ci prévues à cet effet, ledit dispositif (1) comprenant pour chaque organe fonctionnel (3) un interrupteur (12) à commande manuelle interposé entre une ligne de fourniture (14) d'un potentiel électrique de commande destinée à être raccordée à une borne d'alimentation associée (9), et une ligne associée de transmission (16) du potentiel électrique de commande audit au moins un organe fonctionnel (3), caractérisé en ce qu'il comprend en outre pour chaque interrupteur (12) un organe (18) associé de commande de moyens (20) de sécurité d'amenée dudit potentiel électrique de commande audit au moins un interrupteur (12), l'activation desdits moyens de sécurité (20) étant provoquée par le premier état d'ouverture dudit au moins un interrupteur (12).

2. Dispositif selon la revendication 1, caractérisé en ce que l'organe (22) associé de commande desdits moyens (20) de sécurité comprend un contact mobile d'activation porté par l'interrupteur (12) auquel il est associé, disposé dans une ligne d'activation (30) desdits moyens de sécurité (20) et couplé à un contact mobile (13) dudit interrupteur (12) permettant la transmission du potentiel de commande audit au moins un organe fonctionnel (3).

3. Dispositif selon la revendication 2, caractérisé en ce que lesdits moyens de sécurité (20) comportent un relais (40) à automaintien activé par la réception d'un potentiel d'alimentation par l'intermédiaire de ladite ligne (30) d'activation pour établir dans sa position active la fourniture du potentiel électrique de commande audit au moins un interrupteur (12).

4. Dispositif selon la revendication 3, caractérisée en ce que ladite ligne d'activation (30) est raccordée, en amont du relais à automaintien (40), à la ligne (14) de fourniture du potentiel de commande pour fournir ledit potentiel d'alimentation au relais à automaintien (40) lors du premier état d'ouverture dudit au moins un interrupteur (12).

5. Dispositif selon la revendication 3, caractérisée en ce que ladite ligne d'activation (30) est raccordée à une pile électrique portée par le dispositif pour fournir ledit potentiel d'alimentation au relais à automaintien (40) lors du premier état d'ouverture dudit au moins un interrupteur (12).

6. Dispositif selon l'une quelconque des revendications 1 à 5, caractérisé en ce qu'il comprend plusieurs interrupteurs (12) pour plusieurs organes fonctionnels (3) et en ce que l'activation desdits moyens de sécurité (20) est provoquée par le premier état d'ouverture de l'ensemble des interrupteurs (12).

7. Dispositif selon les revendications 2 et 6, prises ensemble, caractérisé en ce que lesdits seconds contact mobiles (22) sont disposés en série dans ladite ligne d'activation (30) de sorte que les moyens (20) de sécurité sont activés lorsque chaque interrupteur (12) se trouve dans son premier état d'ouverture.

8. Dispositif selon l'une quelconque des revendications 1 à 7, caractérisé en ce qu'il comporte des moyens (50) de signalisation de l'état d'activation desdits moyens (20) de sécurité.
